# EUROPEAN PATENT APPLICATION

(11) **EP 4 768 309 A1**
(43) Date of publication of application: **01.07.2026**
(21) Application number: 25807973.0
(22) Date of filing: 11.04.2025
(51) Int. Cl.: B60L 3/12, B60L 3/00, G06F 16/27, H04L 12/40, H04L 49/90, H04L 12/10

(54) **DATA MANAGEMENT DEVICE, VEHICLE INCLUDING SAME, AND METHOD THEREOF**

(30) Priority: 24.05.2024 KR 20240068003
(71) Applicant: LG ENERGY SOLUTION, LTD., Seoul 07335 (KR)
(72) Inventor: JUNG, Jae Sang, Daejeon 34122 (KR); LEE, Ye Seul, Daejeon 34122 (KR); CHOI, Bo Bi, Daejeon 34122 (KR)
(74) Representative: Plasseraud IP
(86) International application number: PCT/KR2025/004928
(87) International publication number: WO 2025/244293

(57) **Abstract**

According to an embodiment disclosed in this document, a data management device includes a first control unit electrically connected to a first digital tachograph (DTG) and a second control unit electrically connected to a second DTG. For example, the first control unit may be configured to store first driving data regarding a first zone of an its own vehicle in the first DTG and the second control unit may be configured to store second driving data regarding a second zone distinct from the first zone of the its own vehicle in the second DTG.

## Description

### TECHNICAL FIELD

### Cross-reference to Related Applications

This application claims priority from Korean Patent Application No. 10-2024-0068003, filed on May 24, 2024, the disclosure of which is incorporated by reference herein.

### Technical Field

Embodiments disclosed in this document relate to a data management device and method, and a vehicle including the data management device.

### BACKGROUND ART

As electric vehicles powered by electricity become widespread, research and development on new vehicle architectures are actively being conducted. For example, the electric vehicle may be powered by secondary batteries. Here, secondary batteries are batteries that can be charged and discharged, and may be interpreted including both conventional Ni/Cd batteries, Ni/MH batteries, and recent lithium ion batteries. Among secondary batteries, lithium ion batteries have the advantage of having much higher energy density than conventional Ni/Cd batteries and Ni/MH batteries, etc. In addition, lithium ion batteries may be manufactured to be small and lightweight, and thus lithium ion batteries are used as power sources for mobile devices. Recently, the scope of use of the lithium ion batteries has expanded to include a power source for electric vehicles, and the lithium ion batteries are attracting attention as a next-generation energy storage medium.

Such battery cells, battery modules, battery packs, or battery racks may be utilized in various devices. As an example, batteries may be utilized not only in mobile devices such as mobile phones, laptop computers, smart phones, and smart pads, but also in the fields of vehicles powered by electricity (EVs, HEVs, and PHEVs), large-capacity power storage devices (ESS), etc.

The state and operation of these batteries can be managed and controlled by a battery management system (BMS). The battery management system can be included together with the battery in a single apparatus.

Meanwhile, as the automobile industry changes, the concept of future mobility such as software defined vehicle (SDV) and purpose-built vehicle (PBV) is gradually becoming more concrete. For example, the SDV refers to a car that controls and manages hardware with software. Software according to the SDV can define not only the driving performance of the car, but also the convenience functions, safety functions, emotional quality of the car, and the brand's identity. By the architecture through the SDV, vehicle development costs can be reduced through the commonization of ECU and internalization of software. In addition, autonomous driving technology can be advanced through high-performance computers and networks based on electronic architecture.

### DISCLOSURE OF THE INVENTION

### TECHNICAL PROBLEM

In the process of autonomous driving control for vehicles, managing and storing data according to autonomous driving are becoming increasingly important. In particular, improving the accuracy of technology for recording and managing data in order to determine the subject and ratio of fault in the event of an accident is becoming an increasingly important issue.

Embodiments provide an excellent data management device and method in terms of data storage efficiency and storage management safety, and a vehicle including the data management device, by implementing an algorithm that can efficiently store and manage data using a plurality of data storage devices (e.g., digital tachographs (DTGs)) in a vehicle including an SDV architecture.

The technical problems of the embodiments disclosed in this document are not limited to the technical problems mentioned above, and other technical problems that are not mentioned may be clearly understood by those skilled in the art from the descriptions below.

### TECHNICAL SOLUTION

According to an embodiment disclosed in this document, a first control unit electrically connected to a first digital tachograph (DTG) and a second control unit electrically connected to a second DTG are included.

According to an embodiment, the first control unit may be configured to store first driving data regarding a first zone of an its own vehicle in the first DTG.

According to an embodiment, the second control unit may be configured to store second driving data regarding a second zone distinct from the first zone of the its own vehicle in the second DTG.

According to an embodiment, when a processing amount of data generated in the first zone exceeds a designated amount, the first control unit may be configured to transmit the first driving data stored in the first DTG to the second DTG, or to receive the second driving data from the second DTG and then store the second driving data in the first DTG.

According to an embodiment, the first control unit may be configured to, when receiving the second driving data, synchronize the first driving data and the second driving data based on at least one of a type, timestamp, occurrence time point, or any combination thereof of the first driving data and the second driving data, to generate synchronization data, and to transmit the synchronization data to a vehicle controller for controlling the its own vehicle.

According to an embodiment, the first driving data and the second driving data may be stored in the first DTG corresponding to the first zone and the second DTG corresponding to the second zone, respectively, through automotive Ethernet.

According to an embodiment, the first control unit may be configured to, when a designated event for the its own vehicle occurs, raise a priority of an operation of storing and backing up the first driving data, transmitting the first driving data to the second DTG whose mounting location is distinct from the first DTG, or storing the second driving data received from the second DTG in the first DTG.

According to an embodiment, the first control unit may be configured to determine that the designated event has occurred when it is identified that an abnormality has occurred in an operation of the its own vehicle.

According to an embodiment, when power supply to the first zone is interrupted, the first DTG may receive power from an emergency power source, and through Power over Ethernet (PoE) by the emergency power source, the first driving data stored in the first DTG may be transmitted to the second DTG, or the second driving data stored in the second DTG may be transmitted to the first DTG.

According to an embodiment disclosed in this document, a vehicle including any one of the data management devices described above may be provided.

According to an embodiment disclosed in this document, a data management method includes storing, by a first control unit, first driving data regarding a first zone of an its own vehicle in a first DTG corresponding to the first zone, and storing, by a second control unit, second driving data regarding a second zone distinct from the first zone of the its own vehicle in a second DTG corresponding to the second zone.

According to an embodiment, the data management method may further include, when a processing amount of data generated in the first zone exceeds a designated amount, by the first control unit, transferring the first driving data stored in the first DTG to the second DTG, or receiving the second driving data from the second DTG and then storing the second driving data in the first DTG.

According to an embodiment, the data management method may further include, when the second driving data is received, by the first control unit, synchronizing the first driving data and the second driving data based on at least one of a type, timestamp, occurrence time point, or any combination thereof of the first driving data and the second driving data and generating synchronization data, and transmitting, by the first control unit, the synchronization data to a vehicle controller for controlling the its own vehicle.

According to an embodiment, the first driving data and the second driving data may be stored in the first DTG corresponding to the first zone and the second DTG corresponding to the second zone, respectively, through automotive Ethernet.

According to an embodiment, the data management method may further include, when a designated event for the its own vehicle occurs, raising, by the first control unit, a priority of an operation of storing and backing up the first driving data, transmitting the first driving data to the second DTG whose mounting location is distinct from the first DTG, or storing the second driving data received from the second DTG in the first DTG.

According to an embodiment, the data management method may further include determining, by the first control unit, that the designated event has occurred when it is identified that an abnormality has occurred in an operation of the its own vehicle.

According to an embodiment, the data management method may further include, when power supply to the first zone is interrupted, receiving, by the first DTG, power from an emergency power source, and through Power over Ethernet (PoE) by the emergency power source, transmitting the first driving data stored in the first DTG to the second DTG, or transmitting the second driving data stored in the second DTG to the first DTG.

### ADVANTAGEOUS EFFECTS

The data management device and method according to the embodiments disclosed in this document can provide a more efficient and controllably intuitive vehicle data management method by separately implementing a data transmission path, a power transmission path, and a transmission subject by distinguishing them under an SDV architecture.

In addition, a variety of effects can be provided that are identified directly or indirectly through this document.

### BRIEF DESCRIPTION OF THE DRAWINGS

FIG. 1 is a conceptual diagram showing a structure of a vehicle including a data management device according to an embodiment disclosed in this document.
FIG. 2 is a conceptual diagram showing another structure of a vehicle including a data management device according to an embodiment disclosed in this document.
FIG. 3 is a block diagram showing a configuration of a data management device according to an embodiment disclosed in this document.
FIG. 4 is a conceptual diagram showing a configuration of a vehicle including a data management device according to an embodiment disclosed in this document.
FIG. 5 is a block diagram showing another configuration of a vehicle including a data management device according to an embodiment disclosed in this document.
FIG. 6 is a flowchart of a data management method according to an embodiment disclosed in this document.
FIG. 7 is another flowchart of a data management method according to an embodiment disclosed in this document.
FIG. 8 is a block diagram showing a hardware configuration of a computing system for performing an operating method of a data management device according to an embodiment disclosed in this document.

### MODE FOR CARRYING OUT THE INVENTION

Hereinafter, various embodiments of the present disclosure will be described with reference to the accompanying drawings. However, this is not intended to limit the present disclosure to a specific embodiment, but should be understood to include various modifications, equivalents, and/or alternatives of the embodiments of the present disclosure.

In this document, the singular form of a noun corresponding to an item may include one or more of said item, unless the relevant context clearly indicates otherwise. In this document, each of phrases "A or B", "at least one of A and B", "at least one of A or B", "A, B, or C", "at least one of A, B, and C", and "at least one of A, B, or C" may include any one of the items listed together in that phrase, or all possible combinations thereof. Terms such as "first", "second", or "firstly" or "secondly" may be used merely to distinguish one component from another, and do not limit the components in any other respect (e.g., importance or order). When a component (e.g., a first component) is referred to as being "connected", "coupled" or "joined" to another component (e.g., a second component), with or without the terms "functionally" or "communicatively", it means that the component can be connected to the other component directly (e.g., in a wired manner), or wirelessly through a third component.

Each of the components described in this document (e.g., modules or programs) may contain a singular or multiple entities. According to various embodiments, one or more of the components among the components described above or operations may be omitted, or one or more other components or operations may be added. Alternatively or additionally, a plurality of components (e.g., modules or programs) may be integrated into a single component. In such a case, the integrated component may perform one or more functions of each of the plurality of components identically or similarly to those performed by the corresponding component among the plurality of components prior to the integration. According to various embodiments, the operations performed by a module, program, or other component may be performed sequentially, in parallel, repeatedly, or heuristically, or one or more of the operations may be performed in a different order, omitted, or performed by being added with one or more other operations.

The term "module" or "... unit" used in this document may include a unit implemented in hardware, software or firmware, and may be used interchangeably with terms such as logic, logic blocks, parts, or circuits, for example. The module may be a part that is integrally formed or a minimum unit or portion of the part that performs one or more functions. For example, according to an embodiment, the module may be implemented in the form of an application-specific integrated circuit (ASIC).

Various embodiments of this document may be implemented as software (e.g., a program or an application) including one or more instructions stored in a machine readable storage medium (e.g., a memory). For example, a processor of the machine may call at least one instruction among the one or more instructions stored from the storage medium and execute the instruction. This enables the machine to operate to perform at least one function according to the at least one instruction called. The one or more instructions may include code generated by a compiler or code executable by an interpreter. The machine-readable storage medium may be provided in the form of a non-transitory storage medium. Here, 'non-transitory' means only that the storage medium is a tangible device and does not contain a signal (e.g., electromagnetic waves), and this term does not distinguish between cases where data is stored semi-permanently and cases where data is stored temporarily in the storage medium.

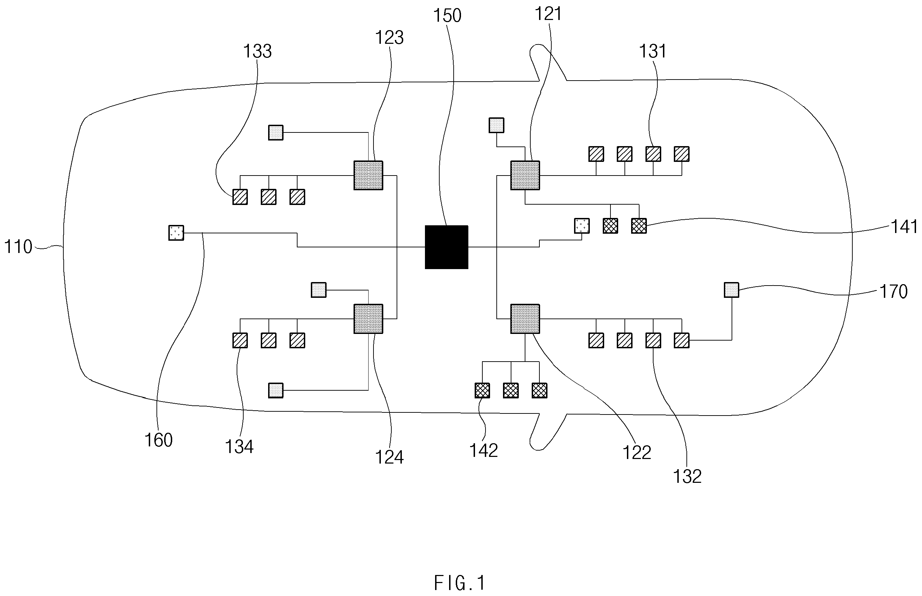

FIG. 1 is a conceptual diagram showing a structure of a vehicle including a data management device according to an embodiment disclosed in this document.

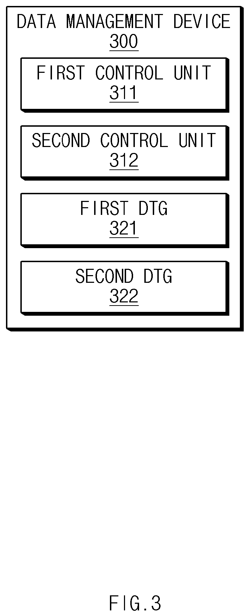

According to an embodiment, a data management device (e.g., a data management device 300 of FIG. 3) may include at least some of components included in a vehicle 110 according to the SDV architecture. The data management device may, for example, manage power and/or data transmitted and received between the components of the vehicle 110.

For example, the vehicle 110 may include at least one of a first zone controller 121, a second zone controller 122, a third zone controller 123, a fourth zone controller 124, a first end device 131, a second end device 132, a third end device 133, a fourth end device 134, a first actuator 141, a second actuator 142, a high performance computer (HPC) 150, a transmission and reception path 160, an additional element 170, or any combination thereof. The data management device for data management of the vehicle 110 may include at least some of the components included in the vehicle 110.

For example, the components according to the SDV architecture may include a hierarchical structure in the order of the HPC 150, the zone controllers, and the end devices.

As an example, the HPC 150 may be connected to the first zone controller 121, the second zone controller 122, the third zone controller 123, and the fourth zone controller 124, and may transmit and receive various types of data with each zone controller.

As an example, the first zone controller 121, the second zone controller 122, the third zone controller 123, and the fourth zone controller 124 may control the first end device 131, the second end device 132, the third end device 133, and the fourth end device 134, respectively. The end device may include, for example, at least one of a sensor for controlling the vehicle 110, a battery (or BMS) for driving the vehicle 110, or any combination thereof. For example, when one of the second end devices 132 is a BMS, the additional element 170 may be defined as a battery pack.

As an example, the first zone controller 121 and the second zone controller 122 may control the first actuator 141 and the second actuator 142, respectively. The actuator may include, for example, at least one driving device for driving the vehicle 110.

For example, the components described above may perform communication based on a designated path (e.g., a transmission and reception path 160) through automotive Ethernet.

The data management device according to an embodiment of this document may control and manage a communication process of power and/or data transmitted and received between the components described above.

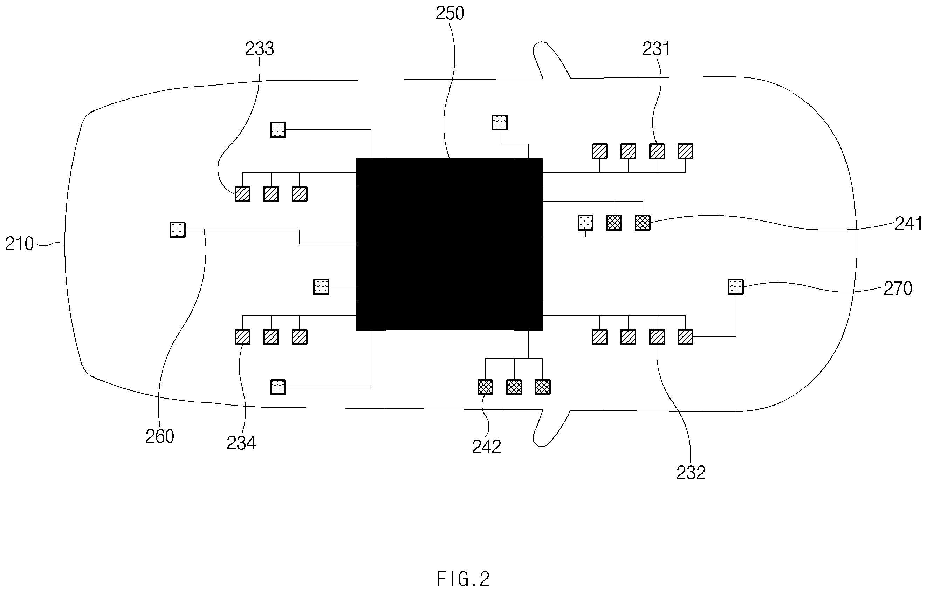

FIG. 2 is a conceptual diagram illustrating a structure of a vehicle including the data management device according to an embodiment disclosed in this document.

In FIG. 2, the description of the components defined with the same names as in FIG. 1 may be replaced with the description of FIG. 1 described above.

For example, an its own vehicle 210 may include at least one of a first end device 231, a second end device 232, a third end device 233, a fourth end device 234, a first actuator 241, a second actuator 242, a high performance computer (HPC) 250, a transmission and reception path 260, an additional element 270, or any combination thereof. The data management device for managing data of the its own vehicle 210 may include at least some of the components included in the its own vehicle 210.

For example, the its own vehicle 210 according to FIG. 2 does not include a zone controller as compared to FIG. 1. That is, even if the SDV architecture is adopted, the its own vehicle 210 may be implemented with a structure in which the HPC 250 directly controls at least one end device as in FIG. 2.

FIG. 3 is a block diagram showing a configuration of a data management device according to an embodiment disclosed in this document.

Referring to FIG. 3, a data management device 300 may include a first control unit 311, a second control unit 312, a first DTG 321, and a second DTG 322.

According to an embodiment, the data management device 300 may perform power and/or data management between components for controlling the its own vehicle. For example, the its own vehicle may be operated by components according to the SDV architecture. For example, the SDV may include a hierarchical structure in the order of high performance computer (HPC), zone, end device, and sensor/actuator. In this case, a vehicle according to the SDV may be divided into a plurality of zones, and each zone may include a control unit (e.g., a zone controller) for controlling components of a lower layer included in the zone. The control unit of the zone is electrically connected to the HPC and may transmit and receive various signals. The above-described contents are exemplary, and the embodiments of the present invention are not limited thereto. For example, according to another embodiment according to the SDV architecture (e.g., an embodiment of the SDV architecture according to FIG. 2), the HPC and the end device are operatively connected to each other, and the zone may be omitted. For example, the first control unit 311 and the second control unit 312 may be zone controllers for controlling the first zone and the second zone among the plurality of zones in the vehicle, respectively.

The data management device 300 may transmit and receive at least one of power, data (e.g., wake-up packet), control signal, or any combination thereof with respect to components included in an electronic apparatus. In an embodiment, the electronic apparatus may be a mobile device (e.g., a mobile phone, a laptop computer, a smart phone, a smart pad), an electric vehicle (e.g., an electric vehicle (EV), a hybrid EV (HEV), a plug-in HEV (PHEV), and a fuel cell EV (FCEV)), an energy storage system (ESS), or a battery swapping system (BSS). In an embodiment, the electronic apparatus may include a vehicle (e.g., an electric vehicle, a hybrid vehicle, etc.) and a moving object driven based on electric energy. In other words, for example, the data management device 300 may be included in the vehicle and configured to manage data for the operation of the vehicle (e.g., the operation for autonomous driving control).

The operation of the data management device 300 described below may be performed by a battery management system (BMS) in the vehicle, a battery BMS provided in a battery pack, and may be performed in various devices such as servers, clouds, chargers, or chargers/dischargers.

According to an embodiment, the first control unit 311 and the second control unit 312 may each include one or more processors corresponding to the first zone and the second zone of its own vehicle. In FIG. 3, the data management device 300 is illustrated as including two control units 311 and 312, but the embodiments of this document are not limited thereto. For example, the data management device 300 may further include at least one control unit (or, zone controller) corresponding to each of a plurality of zones included in the its own vehicle.

For example, the first control unit 311 and the second control unit 312 may be electrically connected. The first control unit 311 and the second control unit 312 may be electrically connected to, for example, other components (e.g., at least one end device). The end device may include, for example, a battery management system (BMS).

For example, each processor included in each of the first control unit 311 and the second control unit 312 may include a central processing unit, an application processor, a graphic processing unit, a neural processing unit (NPU), an image signal processor, a sensor hub processor, or a communication processor.

The functions and operations of the data management device 300 described below may be performed by one processor (or, the first control unit 311 and/or the second control unit 312), or the functions may be separated at least in part and performed by a plurality of processors.

According to an embodiment, the zone corresponding to the first control unit 311 and the second control unit 312 may be one of a plurality of zones of the physically separated its own vehicle. For example, the plurality of zones may include a front zone including the front area, a rear zone including the rear area, a left zone including the left area, and a right zone including the right area of its own vehicle.

According to an embodiment, each zone may include a controller (e.g., a first control unit 311 and/or a second control unit 312) for controlling and managing components for the operation of the its own vehicle (e.g., sensors, actuators, cameras, driving and braking devices, batteries, etc.).

According to an embodiment, the first control unit 311 and the second control unit 312 may correspond to the first zone and the second zone, respectively. In other words, the first control unit 311 may store and manage first driving data generated in the first zone, and the second control unit 312 may store and manage second driving data generated in the second zone.

For example, the first control unit 311 may be electrically connected to the first digital tachograph (DTG) 321 for storing and managing first driving data, and the second control unit 312 may be electrically connected to the second DTG 322 for storing and managing second driving data.

As an example, the first DTG 321 may be mounted at a position corresponding to a zone different from that of the second DTG 322. For example, when first DTG 321 is placed in a part of the front area of the its own vehicle, the second DTG 322 may be placed in at least a part of the rear area, the left area, and the right area of the its own vehicle.

For example, the first control unit 311 may store at least a part of the first driving data regarding the first zone of the its own vehicle in the first DTG 321.

For example, the second control unit 312 may store at least a part of the first driving data regarding the first zone of the its own vehicle in the second DTG 322.

For example, the first control unit 311 and the second control unit 312 may store the first driving data and the second driving data in the first DTG 321 corresponding to the first zone and the second DTG 322 corresponding to the second zone, respectively, through automotive Ethernet.

For example, when a processing amount of data generated in the first zone exceeds a designated amount, the first control unit 311 may transmit at least some of the first driving data stored in the first DTG 321 to the second DTG 322 and/or receive the second driving data from the second DTG 322 and store the second driving data in the first DTG 321.

For example, the first control unit 311 may synchronize the stored driving data. As an example, when the first control unit 311 receives the second driving data from the second DTG 322, the first control unit 311 may synchronize the first driving data and the second driving data stored in the first DTG 321. As an example, the first control unit 311 may synchronize the first driving data and the second driving data based on at least one of a type, timestamp, occurrence time point, or any combination thereof of each of the first driving data and the second driving data to generate synchronization data. The synchronization data may include, for example, integrated data for the operation of the its own vehicle. As an example, the first control unit 311 may transmit the data to a vehicle controller (e.g., an HPC 150 or 250 of FIG. 1 or FIG. 2) for controlling the its own vehicle.

For example, when a designated event for its own vehicle occurs, the first control unit 311 may raise a priority of at least one operation relating to storage and management of the first driving data and the second driving data, and perform at least one operation before the other operations.

As an example, the first control unit 311 may raise the priority of an operation of storing and backing up the first driving data in the first DTG 321, transmitting the first driving data to the second DTG 322 whose mounting location is distinct from the first DTG 321, or storing the second driving data received from the second DTG 322 in the first DTG 321.

As an example, if it is determined that an abnormality has occurred in the operation of the its own vehicle, the first control unit 311 may determine that a designated event has occurred. The case where an abnormality has occurred in the operation of the vehicle may include, for example, a case where an accident has occurred, such as the vehicle colliding with an external object (e.g., another vehicle) or a failure in at least some of the components of the its own vehicle.

For example, if the power supply to a specific zone is interrupted, the data management device 300 may store and manage driving data through power supplied from an emergency power source to the DTG corresponding to the specific zone.

As an example, if the power supply to the first zone is interrupted, power may be supplied to the first DTG 321 from the emergency power source. The first DTG 321 may transmit the first driving data stored in the first DTG 321 to the second DTG 322 through, for example, Power over Ethernet (PoE) by the emergency power source. The first DTG 321 may receive and store the second driving data stored in the second DTG 322, for example, through Power over Ethernet (PoE) by the emergency power source.

According to an embodiment of this document, a vehicle including the data management device 300 described above may be disclosed. The vehicle may operate based on at least one driving data (or synchronization data) generated using, for example, the data management device 300.

The operation of the first control unit 311 described above may also be performed by the second control unit 312. In other words, the second control unit 312 may perform at least some of the operations of the first control unit 311 described above. For example, when the processing amount of data generated in the second zone exceeds a designated amount, the second control unit 312 may transmit at least some of the second driving data stored in the second DTG 322 to the first DTG 321 or store the first driving data received from the first DTG 321 in the second DTG 322.

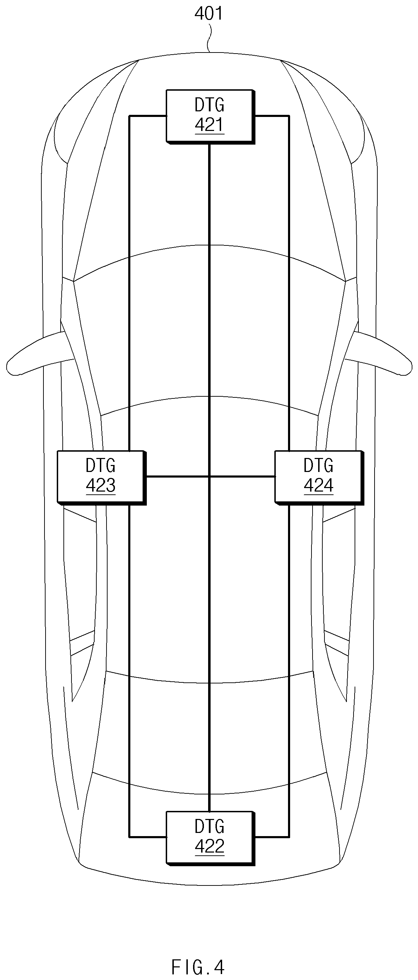

FIG. 4 is a conceptual diagram showing the configuration of a data management device according to an embodiment disclosed in this document.

According to an embodiment, an its own vehicle 401 (e.g., the vehicle 110 or 210 of FIG. 1 or FIG. 2) may operate based on a data management device (e.g., the data management device 300 of FIG. 3).

For example, the its own vehicle 401 may include a plurality of DTGs 421, 422, 423, and 424 respectively corresponding to a plurality of physically separated zones.

For example, the its own vehicle 401 may include the front DTG 421 that stores and manages driving data generated in a zone including a front area of the its own vehicle 401.

For example, the its own vehicle 401 may include the rear DTG 422 that stores and manages driving data generated in a zone including a rear area of the its own vehicle 401.

For example, the its own vehicle 401 may include the left DTG 423 that stores and manages driving data generated in a zone including a left area of the its own vehicle 401.

For example, the its own vehicle 401 may include the right DTG 424 that stores and manages driving data generated in a zone including a right area of the its own vehicle 401.

According to an embodiment, the its own vehicle 401 may operate based on synchronization data (or integrated data) generated by synchronizing driving data stored in the plurality of DTGs 421, 422, 423, and 424.

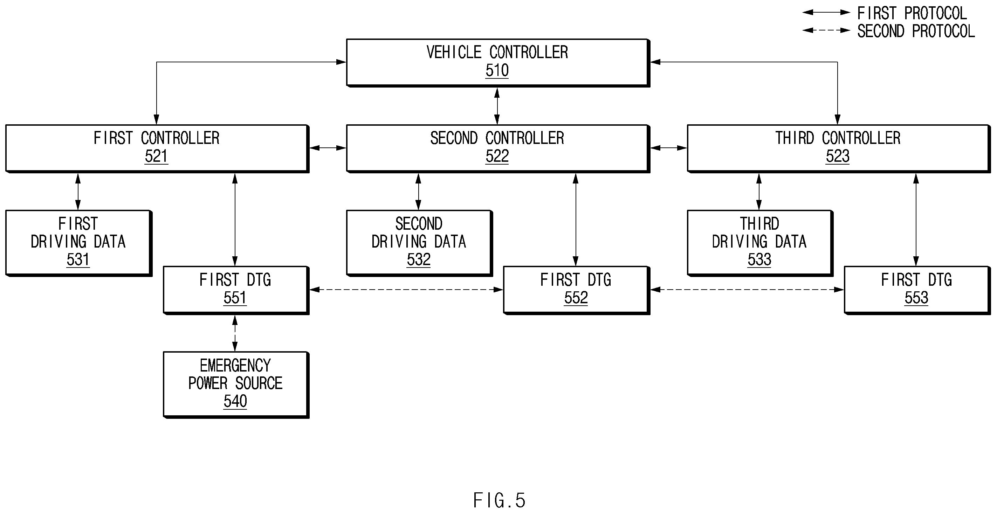

FIG. 5 is a conceptual diagram showing the configuration of a data management device according to an embodiment disclosed in this document.

According to an embodiment, the data management device (e.g., the data management device 300 of FIG. 3) may include at least one of a vehicle controller 510 (e.g., the HPC 150 or 250 of FIG. 1 or FIG. 2), a first controller 521 (e.g., the first control unit 311 of FIG. 3), a second controller 522 (e.g., the second control unit 312 of FIG. 3), a third controller 523, a first DTG 551 (e.g., the first DTG 321 of FIG. 3), a second DTG 552 (e.g., the second DTG 322 of FIG. 3), a third DTG 553, an emergency power source 540, or any combination thereof. For example, components included in the data management device may transmit and receive power and/or data based on a first protocol (e.g., automotive Ethernet) or a second protocol (e.g., Power over Ethernet (PoE)).

In FIG. 5, the data management device is illustrated as including the vehicle controller 510 and the emergency power source 540, but this is exemplary, and the data management device may be implemented to be physically separated from the vehicle controller 510 and the emergency power source 540, and may be electrically connected to transmit and receive data and/or power.

For example, the vehicle controller 510 may transmit and receive data with a plurality of controllers respectively corresponding to the plurality of zones included in the its own vehicle. The vehicle controller 510 may include, for example, at least one processor having relatively high performance compared to the plurality of controllers.

For example, the first controller 521, the second controller 522, and the third controller 523 may be provided to control components included in the first zone, the second zone, and the third zone among the plurality of zones, respectively.

For example, the first controller 521 may store and manage first driving data 531 generated (or identified) in the first zone in the first DTG 551.

For example, the second controller 522 may store and manage second driving data 532 generated in the second zone in the second DTG 552.

For example, the third controller 523 may store and manage third driving data 533 generated (or identified) in the third zone in the third DTG 553.

Referring to FIG. 5, according to an embodiment, the data management device may transmit driving data to another DTG based on power supplied through the emergency power source 540 when power supply to some zones is interrupted.

For example, when power supply to the first zone is interrupted, the first DTG 551 may receive power from the emergency power source 540. In this case, the first DTG 551 may transmit the first driving data stored in the first DTG 551 to the second DTG 552 and/or the third DTG 553 through Power over Ethernet (PoE) by the emergency power source 540, or may receive the driving data (e.g., the second driving data 552 and/or the third driving data 553) stored in the second DTG 552 and/or the third DTG 553, and store and manage the driving data.

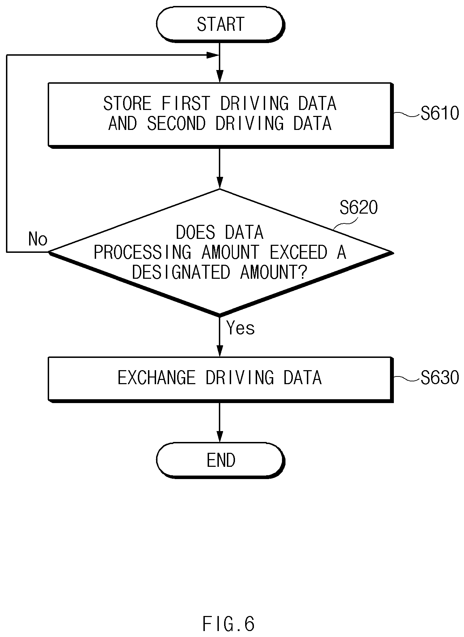

FIG. 6 is a flowchart of a data management method according to an embodiment disclosed in this document.

According to an embodiment, a data management device (e.g., the data management device 300 of FIG. 3) may perform the operations disclosed in FIG. 6. For example, at least some of the components included in the data management device (e.g., the first control unit 311, the second control unit 312, the first DTG 321, and/or the second DTG 322 of FIG. 3) may be set to perform the operations of FIG. 6.

In the following embodiment, operations of S610 to S630 may be performed sequentially, but are not necessarily performed sequentially. For example, the order of the operations may be changed, and at least two operations may be performed in parallel. In addition, contents corresponding to or overlapping with the contents described above in relation to FIG. 6 may be briefly described or omitted.

Referring to FIG. 6, the data management method may include storing first driving data and second driving data (S610), determining whether the data processing amount exceeds a designated amount (S620), and exchanging driving data (S630).

In step S610, the data management device may store the first driving data and the second driving data in a DTG. For example, the data management device may store the first driving data generated (or identified) in a first zone in a first DTG corresponding to the first zone. For example, the data management device may store the second driving data generated (or identified) in a second zone in a second DTG corresponding to the second zone.

In step S620, the data management device may determine whether a data processing amount exceeds a designated amount. If the data processing amount exceeds the designated amount, the data management device may perform step S630, and repeat step S610 if the data processing amount does not exceed the designated amount.

In step S630, the data management device may exchange driving data. For example, if the processing amount of the first driving data generated in the first zone exceeds a designated amount, the data management device may transmit the first driving data to the second DTG or store the second driving data transmitted from the second DTG in the first DTG.

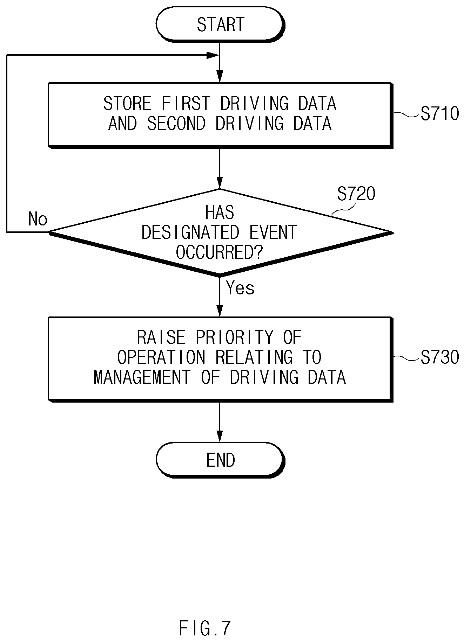

FIG. 7 is a flowchart of a data management method according to an embodiment disclosed in this document.

According to an embodiment, a data management device (e.g., data management device 300 of FIG. 3) may perform the operations disclosed in FIG. 7. For example, at least some of the components included in the data management device (e.g., the first control unit 311, the second control unit 312, the first DTG 321, and/or the second DTG 322 of FIG. 3) may be set to perform the operations of FIG. 7.

In the following embodiment, operations of S710 to S730 may be performed sequentially, but are not necessarily performed sequentially. For example, the order of the operations may be changed, and at least two operations may be performed in parallel. In addition, contents corresponding to or overlapping with the contents described above in relation to FIG. 7 may be briefly described or omitted.

Referring to FIG. 7, the data management method may include storing first driving data and second driving data (S710), identifying occurrence of a designated event (S720), and raising the priority of an operation relating to driving data management (S730).

In step S710, the data management device may store the first driving data and the second driving data in the DTG. For example, the data management device may store the first driving data generated (or identified) in a first zone in a first DTG corresponding to the first zone. For example, the data management device may store the second driving data generated (or identified) in a second zone in a second DTG corresponding to the second zone.

In step S720, the data management device may monitor whether a designated event for an its own vehicle occurs. If it is identified that an abnormality has occurred in the operation of the its own vehicle, the data management device may determine that the designated event has occurred.

In step S730, the data management device may raise the priority of an operation of storing and backing up the first driving data, transmitting the first driving data to the second DTG whose mounting location is distinct from the first DTG, or storing the second driving data received from the second DTG in the first DTG. Through this, the data management device may implement a safe data storage algorithm by exchanging and backing up previously stored data between DTGs before data damage occurs due to an operation abnormality (or, occurrence of an accident) of the its own vehicle, or immediately after the accident occurs before data damage occurs.

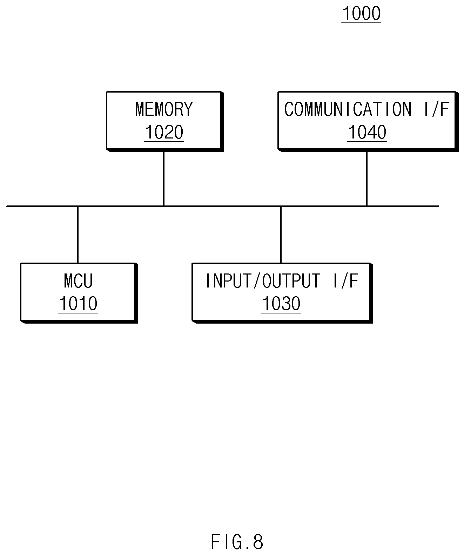

FIG. 8 is a block diagram showing a hardware configuration of a computing system for performing an operating method of a data management device according to an embodiment disclosed in this document.

Referring to FIG. 8, a computing system 1000 according to an embodiment disclosed in this document may include an MCU 1010, a memory 1020, an input/output I/F 1030, and a communication I/F 1040.

The MCU 1010 may be a processor that executes various programs stored in the memory 1020, processes various information including battery data through these programs, and performs the functions of the processor (or the control unit) included in the data management device shown in FIG. 3 described above.

The memory 1020 may store various programs for performing functions of the data management device. In addition, the memory 1020 may store various types of information including battery data (voltage data, capacity data, etc.), differential capacity data, etc., and may include a constructed database.

A plurality of such memories 1020 may be provided as needed. The memory 1020 may be a volatile memory or a nonvolatile memory. The memory 1020 used as the volatile memory may be RAM, DRAM, SRAM, etc. The memory 1020 used as the nonvolatile memory may be ROM, PROM, EAROM, EPROM, EEPROM, flash memory, etc. The examples of the memories 1020 listed above are only examples and are not limited to these examples.

The input/output I/F 1030 may provide an interface that allows data to be transmitted and received by connecting an input device (not shown) such as a keyboard, mouse, or touch panel and an output device (not shown) such as a display with the MCU 1010.

The communication I/F 940 is a configuration that can transmit and receive various data with the server, and may be various devices that can support wired or wireless communication. For example, the data management device may transmit and receive various information including battery data, etc. to and from a separately provided external server through the communication I/F 1040.

In this way, the computer program according to an embodiment disclosed in this document may be implemented as a module that performs, for example, each function shown in FIG. 1, by being recorded in the memory 1020 and processed by the MCU 1010.

In the above, even though all the components constituting the embodiments disclosed in this document have been described as being combined as one or operating in combination, the embodiments disclosed in this document are not necessarily limited to such embodiments. That is, within the scope of the purpose of the embodiments disclosed in this document, all of the components may be selectively combined and operated in one or more combinations.

In addition, the terms "include," "configure," or "have" described above, unless specifically stated to the contrary, mean that the corresponding component may be included, and therefore should be interpreted as being able to further include other components rather than excluding other components. All terms including technical or scientific terms have the same meaning as commonly understood by a person skilled in the art to which the embodiments disclosed in this document belong, unless otherwise defined. Terms commonly used, such as terms defined in the dictionary, should be interpreted as being consistent with the contextual meaning of the relevant technology, and should not be interpreted in an idealized or overly formal sense unless clearly defined in this document.

The above description is merely an illustrative description of the technical ideas disclosed in this document, and those skilled in the art to which the embodiments disclosed in this document belong may make various modifications and variations without departing from the essential characteristics of the embodiments disclosed in this document. Accordingly, the embodiments disclosed in this document are intended to illustrate rather than limit the technical ideas of the embodiments disclosed in this document, and the scope of the technical ideas disclosed in this document is not limited by these embodiments. The scope of protection of the technical ideas disclosed in this document should be interpreted by the scope of the claims below, and all technical ideas within the equivalent scope thereof should be interpreted as being included in the scope of rights of this document.

## Claims

1. A data management device comprising:
a first control unit electrically connected to a first digital tachograph (DTG); and
a second control unit electrically connected to a second DTG,
wherein the first control unit is configured to store first driving data regarding a first zone of an its own vehicle in the first DTG, and
the second control unit is configured to store second driving data regarding a second zone distinct from the first zone of the its own vehicle in the second DTG.

2. The data management device of claim 1, wherein when a processing amount of data generated in the first zone exceeds a designated amount, the first control unit is configured to transmit the first driving data stored in the first DTG to the second DTG, or to receive the second driving data from the second DTG and then store the second driving data in the first DTG.

3. The data management device of claim 2, wherein the first control unit is configured to:
when the second driving data is received, synchronize the first driving data and the second driving data based on at least one of a type, timestamp, occurrence time point, or any combination thereof of the first driving data and the second driving data, to generate synchronization data, and
transmit the synchronization data to a vehicle controller for controlling the its own vehicle.

4. The data management device of claim 1, wherein the first driving data and the second driving data are stored in the first DTG corresponding to the first zone and the second DTG corresponding to the second zone, respectively, through automotive Ethernet.

5. The data management device of claim 1, wherein the first control unit is configured to, when a designated event for the its own vehicle occurs, raise a priority of an operation of storing and backing up the first driving data, transmitting the first driving data to the second DTG whose mounting location is distinct from the first DTG, or storing the second driving data received from the second DTG in the first DTG.

6. The data management device of claim 5, wherein the first control unit is configured to determine that the designated event has occurred when it is identified that an abnormality has occurred in an operation of the its own vehicle.

7. The data management device of claim 1, wherein when power supply to the first zone is interrupted,
the first DTG receives power from an emergency power source, and
through Power over Ethernet (PoE) by the emergency power source, the first driving data stored in the first DTG is transmitted to the second DTG, or the second driving data stored in the second DTG is transmitted to the first DTG.

8. A vehicle comprising the data management device according to any one of claims 1 to 7.

9. A data management method comprising:
storing, by a first control unit, first driving data regarding a first zone of an its own vehicle in a first DTG corresponding to the first zone; and
storing, by a second control unit, second driving data regarding a second zone distinct from the first zone of the its own vehicle in a second DTG corresponding to the second zone.

10. The data management method of claim 9, further comprising:
when a processing amount of data generated in the first zone exceeds a designated amount, by the first control unit, transferring the first driving data stored in the first DTG to the second DTG, or receiving the second driving data from the second DTG and then storing the second driving data in the first DTG.

11. The data management method of claim 10, further comprising:
when the second driving data is received, by the first control unit, synchronizing the first driving data and the second driving data based on at least one of a type, timestamp, occurrence time point, or any combination thereof of the first driving data and the second driving data and generating synchronization data; and
transmitting, by the first control unit, the synchronization data to a vehicle controller for controlling the its own vehicle.

12. The data management method of claim 9, wherein the first driving data and the second driving data are stored in the first DTG corresponding to the first zone and the second DTG corresponding to the second zone, respectively, through automotive Ethernet.

13. The data management method of claim 9, further comprising:
when a designated event for the its own vehicle occurs, raising, by the first control unit, a priority of an operation of storing and backing up the first driving data, transmitting the first driving data to the second DTG whose mounting location is distinct from the first DTG, or storing the second driving data received from the second DTG in the first DTG.

14. The data management method of claim 13, further comprising:
determining, by the first control unit, that the designated event has occurred when it is identified that an abnormality has occurred in an operation of the its own vehicle.

15. The data management method of claim 9, further comprising:
when power supply to the first zone is interrupted,
receiving, by the first DTG, power from an emergency power source; and
through Power over Ethernet (PoE) by the emergency power source, transmitting the first driving data stored in the first DTG to the second DTG or transmitting the second driving data stored in the second DTG to the first DTG.
